# EUROPÄISCHE PATENTANMELDUNG

(11) **EP 0 806 829 A1**
(43) Veröffentlichungstag der Anmeldung: **12.11.1997**
(21) Anmeldenummer: 97103804.7
(22) Anmeldetag: 07.03.1997
(51) Int. Cl.: H02J 13/00, H04B 3/54, F24C 7/08

(54) **Elektrisches Haushaltsgerät, wie Herd, Backofen, Kochfeld oder dgl.**

(30) Priorität: 11.05.1996 DE 19619139
(71) Anmelder: AEG Hausgeräte GmbH, 90429 Nürnberg (DE)
(72) Erfinder: Gehrke, Bernd, Dipl.-Ing., 91338 Igensdorf (DE)

(57) **Zusammenfassung**

Elektrisches Haushaltsgerät, bestehend aus einem Lastteil (1,8) und einem Steuerteil (4,7,10), wobei der Steuerteil (4,7,10) räumlich entfernt vom Lastteil (1,8) angeordnet ist und beide Teile an der Netzleitung (3) der Hausinstallation anschließbar sind. Zwecks Vermeidung einer separaten Leitungs-Installation ist bei entsprechender Ausrüstung des Last- und des Steuerteiles mit entsprechenden elektronischen Mitteln die Steuerung des Lastteils des Haushaltsgeräts über die elektrische Versorgungs- bzw. Netzleitung (3) der Hausinstallation durchführbar.

## Beschreibung

Die Erfindung betrifft ein elektrisches Haushaltsgerät nach dem Oberbegriff des Patentanspruchs 1 oder 6.

Es ist ein elektrisches Haushaltsgerät bestehend aus einem Back- und Bratofen und einem Kochfeld bekannt, dessen Elektronik-Steuereinheit räumlich davon im Oberschrank einer zugehörigen Küchenmöbelzeile eingebaut ist. Dadurch ist diese Steuereinheit leicht zu bedienen und ist für Kleinkinder nicht erreichbar. Hierbei ist aber von Nachteil, daß für die Verbindung der Steuereinheit mit den betreffenden Lastteilen (z. B. Back- und Bratofen, Kochfeld) eine entsprechende Steuer- und Lastleitung in der Küche installiert werden muß. Eine solche Verbindungsleitung-Installation erfordert aber einen großen Zeit- und Arbeitsaufwand und ist in Einbauküchen mit einer gefliesten Küchenwand zwischen den Oberschränken und der Arbeitsplatte der Küchenmöbelzeile nachträglich nur noch durch Überwindung größter Schwierigkeiten zu realisieren.

Ausgehend von diesem Stand der Technik liegt der Erfindung die Aufgabe zugrunde, den Aufwand für die Steuerung eines vom Steuerteil räumlich entfernt angeordneten Lastteils eines Haushaltsgerätes erheblich zu reduzieren und damit kostengünstiger zu gestalten.

Die Lösung dieser Aufgabe gemäß der Erfindung ist den Merkmalen des Anspruchs 1 oder des Anspruchs 6 zu entnehmen.

Durch die gemäß Anspruch 1 vorgeschlagene Maßnahme werden Kosten für separate Steuerleitungen eingespart, da Lastteil und Steuerteil des elektrischen Haushaltsgerätes zum Zwecke der Steuerung und Regelung sowie der Information an den Benutzer über die elektrische Versorgungsleitung der Hausinstallation miteinander kommunizieren. Diese Versorgungsleitungen dienen damit als Informationsträger zwischen dem Last- und dem Steuerteil des Haushaltsgerätes.

Die gemäß Anspruch 6 vorgeschlagene Funk- oder Infrarot-Übertragung spart ebenfalls separate elektrische Steuerleitungen ein.

Vorteilhafte Ausgestaltungen des Haushaltsgeräts ergeben sich aus den vom Anspruch 1 abhängigen Ansprüchen.

Demnach wandeln die Übertragungsmittel in einer ersten Ausführungsform die Informationen zunächst in frequenz-, pulsweiten- oder amplitudenmodulierte elektrische Signale um und wandeln diese Signale nach deren Übertragung über die Versorgungsleitung wieder zurück in die Informationen oder enstprechende Informationssignale.

Vorzugsweise enthalten die Übertragungsmittel wenigstens einen Modulator zum Modulieren der Netzspannung in der Versorgungsleitung mit die Informationen tragenden elektrischen Signalen und wenigstens einen Demodulator zum Herausfiltern der Informationen aus der modulierten Netzspannung.

Es können ein Modulator der Übertragungsmittel im Steuerteil und jeweils ein Demodulator in jedem Lastteil vorgesehen sein zur Übertragung von Steuerinformationen und/oder jeweils ein Modulator der Übertragungsmittel in jedem Lastteil und ein Demodulator im Steuerteil vorgesehen sein zum Übertragen von Betriebszustandsinformationen der Lastteile.

Anhand in der Zeichnung dargestellter Ausführungsbeispiele von Haushaltsgeräten wird die Erfindung nachfolgend näher beschrieben.

Mit 1 ist ein elektrisch beheiztes Kochfeld (Lastteil) beispielsweise zum Einbau in der Arbeitsplatte einer Küchenmöbelzeile bezeichnet, das über einen Festanschluß 2 an der elektrischen Versorgungsleitung 3 des Hausinstallationsnetzes angeschlossen ist. Ein mit 4 bezeichnetes Steuer- oder Bedienteil für das Kochfeld 1, das von diesem räumlich getrennt zum Beispiel im Oberschrank der Küchenmöbelzeile anbringbar ausgebildet ist, hat einen Netzstecker 5, mit dem das Steuerteil 4 über eine Steckdose 6 ebenfalls an der elektrischen Versorgungsleitung 3 des Hausinstallationsnetzes anschließbar ist.

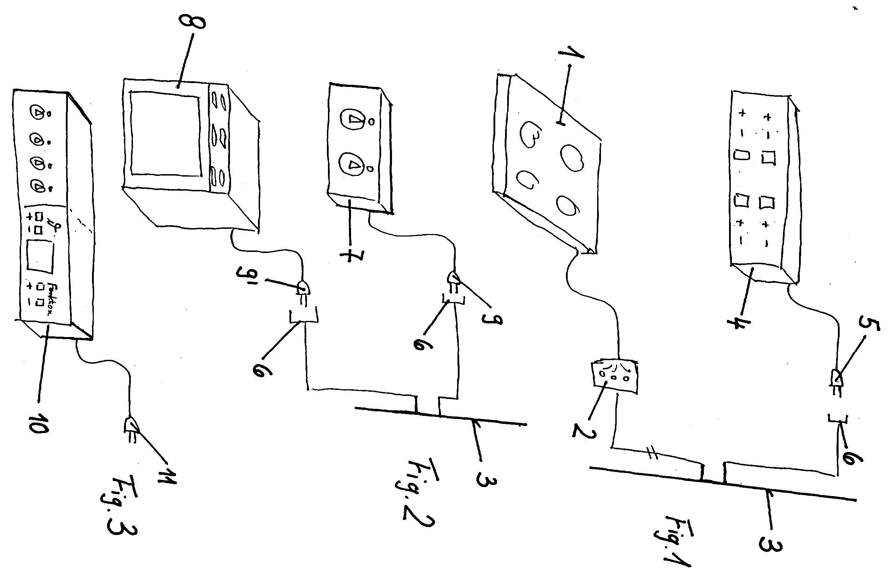

Fig. 2 zeigt ein Steuer- bzw. Bedienteil 7 für einen Back- und Bratofen 8. Das Steuer- bzw. Bedienteil 7 und der Back- und Bratofen 8 sind beide mit einem Netzstecker 9, 9' zur Herstellung der elektrischen Verbindung mit der elektrischen Versorgungsleitung 3 des Hausinstallationsnetzes versehen. Anstelle der separaten Steuer- bzw. Bedienteile 4 und 7 kann auch eine beide Teile in sich vereinigende Steuereinheit 10 mit Netzstecker 11 nach Fig. 3 zum Einsatz kommen.

Durch Integration vorzugsweise elektronischer Übertragungsmittel in den steuernden Teil - Steuer- bzw. Bedienteil 4, 8, 10 - und in den Lastteil - Kochmulde 1 bzw. Back- und Bratofen 8 - ist es möglich, über die normale elektrische Versorgungsleitung 3 des Hausinstallationsnetzes die Steuerung der vorgenannten Lastteile vorzunehmen, d. h. die entsprechend ausgerüsteten Steuer- bzw. Bedienteile 4, 8 , 10 können damit über eine Netzkommunikation mit der Kochmulde 1 oder dem Back- und Bratofen 8 verbunden werden. Die Steuerung der Kochmulde 1 bzw. des Back- und Bratofens 8 beruht bei dieser Signalübertragung nicht mehr auf dem Schalten elektrischer Lasten, sondern auf dem Austausch von Kommandos und Informationen.

Eine solche Datenübertragung durch die Übertragungsmittel über die Versorgungsleitung 3 kann nicht nur von dem Steuerteil 4, 8 oder 10 zum Lastteil 1 oder 8 zur Steuerung und/oder Regelung des Lastteils 1 oder 8 (unidirektionale Übertragung), sondern auch in umgekehrter Richtung von dem Lastteil 1 oder 8 zum Steuerteil 4, 8 oder 10 zur Anzeige von Betriebszuständen oder dergleichen des Lastteils 1 oder 8 erfolgen (bidirektionale Übertragung).

Die Übertragungsmittel enthalten für jeden Übertragungsweg vorzugsweise einen Modulator zur Erzeugung amplitudenmodulierter Datensignale, die der Netzspannung in der Versorgungsleitung mit der Netzfrequenz von im allgemeinen 50 Hz als Trägerfrequenz überlagert werden, und einen entsprechenden Demodulator zum Trennen der Datensignale von der Netzspannung. Das Frequenzband für diese modulierten Signale liegt vorzugsweise gemäß den einschlägigen Funkrichtlinien zwischen 30 kHz und 146 kHz. Zwischen das Hauptnetz und die Hausinstallation werden im allgemeinen Trägerfrequenzsperren geschaltet, um eine Störung anderer Verbraucher in anderen Häusern zu vermeiden.

Anstelle amplitudenmodulierter Signale können zur Übertragung der Informationen zwischen Lastteil 1 oder 8 und Steuerteil 4, 7 oder 10 auch frequenzmodulierte Signale oder pulsweitenmodulierte Signale verwendet werden. Auch in dieser Ausführungsform enthalten die Übertragungsmittel entsprechende Modulatoren und Demodulatoren. Ferner ist es prinzipiell auch möglich, über die Versorgungsleitung direkt binäre Informationssignale im Bereich einiger Volt Signalpegel zu schicken.

In Weiterbildung der Erfindung ist es auch denkbar, eine dem Kochfeld 1 zugeordnete Dunstabzugshaube mit entsprechenden elektronischen Ausrüstungen bei Inbetriebnahme des Kochfeldes durch das Kochfeld-Bedienteil oder des Backofens durch das Backofensteuerteil zu informieren und zu steuern.

Zweckmäßig wäre es auch, die Steuerung des Lastteils des betreffenden Haushaltsgeräts über drahtlose Sendeeinrichtungen und entsprechende Empfangseinrichtungen, insbesondere über Funk- oder Infrarot-Übertragungsmittel durchzuführen.

Schließlich ist auch eine Übertragung der Informationen in Form von Lichtsignalen über Lichtwellenleiter möglich.

## Patentansprüche

1. Elektrisches Haushaltsgerät, umfassend wenigstens ein Lastteil (1, 8) und ein Steuerteil (4, 7, 10), wobei das Steuerteil (4, 7, 10) räumlich entfernt vom Lastteil (1, 8) angeordnet ist und jedes Lastteil (1, 8) und das Steuerteil (4, 7, 10) an einer elektrischen Versorgungsleitung der Hausinstallation anschließbar sind, dadurch gekennzeichnet, daß Übertragungsmittel zur Übertragung von Informationen zwischen Steuerteil (4, 7, 10) und Lastteil (1, 8) über die elektrische Versorgungsleitung der Hausinstallation vorgesehen sind.

2. Elektrisches Haushaltsgerät nach Anspruch 1, bei dem die Übertragungsmittel die Informationen in Form frequenz-, pulsweiten- oder amplitudenmodulierter Signale übertragen.

3. Elektrisches Haushaltsgerät nach Anspruch 1 oder Anspruch 2, bei dem die Übertragungsmittel wenigstens einen Modulator zum Modulieren der Netzspannung in der Versorgungsleitung mit die Informationen tragenden elektrischen Signalen und wenigstens einen Demodulator zum Zurückgewinnen der Informationen aus der modulierten Netzspannung enthalten.

4. Elektrisches Haushaltsgerät nach Anspruch 3, bei dem ein Modulator der Übertragungsmittel im Steuerteil (4, 7, 10) und jeweils ein Demodulator in jedem Lastteil (1, 8) vorgesehen sind zur Übertragung von Steuerinformationen für jedes Lastteil (1, 8).

5. Elektrisches Haushaltsgerät nach Anspruch 3 oder Anspruch 4, bei dem jeweils ein Modulator der Übertragungsmittel in jedem Lastteil (1, 8) und ein Demodulator im Steuerteil (4, 7, 10) vorgesehen sind zum Übertragen von Betriebszustandsinformationen jedes Lastteils (1, 8).

6. Elektrisches Haushaltsgerät, umfassend wenigstens ein Lastteil (1, 8) und ein Steuerteil (4, 7, 10), wobei das Steuerteil (4, 7, 10) räumlich entfernt vom Lastteil (1, 8) angeordnet ist, dadurch gekennzeichnet, daß Übertragungsmittel zur drahtlosen Übertragung von Informationen zwischen dem Lastteil (1, 8) und dem Steuerteil (4, 7, 10) in Form von Funk- oder Infrarot-Signalen vorgesehen sind.
